# EUROPÄISCHE PATENTANMELDUNG

(11) **EP 4 145 005 A1**
(43) Veröffentlichungstag der Anmeldung: **08.03.2023**
(21) Anmeldenummer: 22192931.8
(22) Anmeldetag: 30.08.2022
(51) Int. Cl.: F16B 37/14

(54) **ANBAUTURM-AUSSENKONUSABDECKKAPPE, ANBAUTURM-ABDECKKAPPENBAUGRUPPE, ANBAUTURMBAUGRUPPE, SET UND VERFAHREN**

(30) Priorität: 07.09.2021 DE 102021123179
(71) Anmelder: Wilhelm Stoll Maschinenfabrik GmbH, 38268 Lengede/Broistedt (DE)
(72) Erfinder: Marenbach, Guido, 57635 Kraam (DE)
(74) Vertreter: REHBERG HÜPPE + PARTNER

(57) **Zusammenfassung**

Die Erfindung betrifft eine Anbauturmbaugruppe (51) mit einem Turm (53) oder Gurt (54), der eine Innenkonusfläche (55) aufweist. Eine Anbauturm-Abdeckkappenbaugruppe (60), die aus zwei miteinander verschraubten Deckelteilen (27, 42) besteht, schützt die Innenkonusfläche (55) des Turms (53) oder Gurts (54). Die Erfindung betrifft auch eine Anbauturm-Außenkonusabdecckappe.

## Beschreibung

### TECHNISCHES GEBIET DER ERFINDUNG

Soll an einem Arbeitsfahrzeug, insbesondere einem Traktor, ein Frontlader oder ein anderweitiges Werkzeug angebracht werden, finden hierzu Anbautürme Einsatz. Derartige Anbautürme verfügen über einen Gurt. Der Gurt erstreckt sich ungefähr parallel zur Fahrzeuglängsachse und wird bspw. an einem Chassis, einem Antriebsstrang oder einem Fahrwerksrahmen des Arbeitsfahrzeugs befestigt, was in der Regel durch Anschrauben erfolgt. Des Weiteren verfügt der Anbauturm über einen Turm, der in einem Endbereich eine Aufnahme ausbildet, an der der Frontlader oder das anderweitige Werkzeug gehalten werden kann. Der andere Endbereich des Turms wird lösbar an dem Gurt befestigt. Der Gurt und der Turm können dabei ungefähr die Form eines umgekehrten T aufweisen. Zum Verbinden des Turms mit dem Gurt findet eine Außenkonusfläche formschlüssige Aufnahme in einer korrespondierend ausgebildeten Innenkonusfläche. Der Formschluss zwischen der Außenkonusfläche und der Innenkonusfläche dient einerseits der Vorgabe der relativen Lage des Gurts und des Turms. Andererseits kann über den Formschluss der Außenkonusfläche mit der Innenkonusfläche eine steife Übertragung von Kräften zwischen dem Turm und dem Gurt erfolgen. Möglich ist dabei, dass ein die Außenkonusfläche ausbildendes Außenkonusteil unmittelbar von dem Gurt oder dem Turm ausgebildet wird oder ein Koppelelement ist, welches an dem Gurt oder Turm befestigt wird oder mit dem Gurt oder Turm verschweißt ist. Entsprechend kann die Innenkonusfläche von einem Innenkonusteil ausgebildet werden, welches dann unmittelbar von dem anderen von dem Gurt oder dem Turm ausgebildet werden kann, oder das Innenkonusteil ist ein Koppelelement, welches an dem Gurt oder Turm befestigt, insbesondere verschweißt ist.

### STAND DER TECHNIK

Die Druckschrift EP 3 158 842 B1 offenbart einen Anbauturm mit einem Turm und einem Gurt. Der Gurt ist hier an dem Antriebsstrang des Arbeitsfahrzeugs befestigt, wobei ein vorderer Befestigungsabschnitt des Gurts an dem vorderen Fahrwerkrahmen befestigt ist, während ein hinterer Befestigungsabschnitt des Gurts an einem Schwungmassegehäuse des Antriebsstrangs befestigt ist. Hier erfolgt eine Befestigung des Turms an dem Gurt über eine Verschraubung.

Seitens des Unternehmens ALÖ AB erfolgt eine Lieferung eines Anbauturms, bei dem an dem Gurt vier Außenkonuskörper angeschweißt sind und der Turm an den korrespondierenden Orten Innenkonusflächen aufweist. Die Außenkonusflächen der Außenkonuskörper und die Innenkonusflächen des Turms verfügen über fluchtende Durchgangsbohrungen. Mit der Montage des Gurts an dem Turm treten die Außenkonusflächen des Gurts ein in die Innenkonusflächen des Turms. Eine Sicherung erfolgt dann über Befestigungsschrauben, die sich durch die fluchtende Durchgangsbohrungen hindurch erstrecken.

Seitens der Unternehmensgruppe AGCO wird eine Konusverbindung eingesetzt, die der Verbindung des Anbauturms mit dem Rumpf des Schleppers dient. Zu diesem Zweck sind in ein Gussteil der Kupplungsglocke Innenkonusflächen eingearbeitet, über die der Anbauturm an dem Schlepper positioniert wird. Die Außenkonusflächen sind an den Gurt angearbeitet.

Die Anmelderin vertreibt Anbautürme, die über ein Koppelelement mit zwei entgegengesetzt zueinander orientierten Außenkonusflächen an einer Kupplungsglocke gehalten werden können. Das Koppelelement ist dabei formschlüssig zwischen einer Innenkonusfläche des Anbauturms und einer Innenkonusfläche der Kupplungsglocke angeordnet. Es erfolgt eine zusätzliche Verschraubung des Anbauturms mit dem Schlepper.

Die Druckschrift FR 2 972 203 A1 setzt zwischen dem Gurt und dem Turm ein hülsenartiges Koppelelement ein. Das Koppelelement verfügt über einen hohlzylindrischen Abschnitt, der Aufnahme findet in einer abgestuften Bohrung des Gurts oder des Turms. Ein anderer Abschnitt des Koppelelements bildet eine Außenkonusfläche aus, die passgenaue Aufnahme findet in einer Innenkonusfläche des Turms und des Gurts. Durch die Innenbohrung des Koppelelements sowie die Bohrungen des Gurts und des Turms erstreckt sich dann eine Befestigungsschraube. Die Druckschrift schlägt unterschiedliche Anordnungen der Abschnitte des Koppelelements für die Gewährleistung der axialen Abstützung und der lateralen Abstützung vor. Vorgeschlagen wird auch eine Verschweißung des Koppelelements mit dem Gurt oder dem Turm. Des Weiteren schlägt die Druckschrift vor, dass das Koppelelement zwei entgegengesetzt zueinander orientierte Außenkonusflächen ausbildet, die dann jeweils für die Anlage an Innenkonusflächen des Gurts und des Turms bestimmt sind. Auch vorgeschlagen werden Abrundungen der Außenkonusflächen in einem Längsschnitt. Eine Übertragung der wirkenden Kräfte erfolgt für diese Ausführungsformen nicht ausschließlich über die Konusflächen, sondern ergänzend mittels einer Aufnahme mindestens eines zylindrischen Abschnitts in der Bohrung des Gurts oder Turms.

Die nicht gattungsgemäße Druckschrift US 5,707,113 A offenbart eine Felge, deren zentrale Bohrung und Außenfläche radial innenliegend von den Radbolzen mittels einer Kappe abgedeckt ist. Eine Befestigung der Kappe erfolgt mittels Radmutterkappen, die auf die freien Gewindeenden der Radbolzen aufgesteckt werden. Im Bereich der Radbolzen ist die Kappe zwischen der Felge und den Radbolzenkappen gefangen und auf diese Weise fixiert.

Die nicht gattungsgemäße Druckschrift DE 2 260 223 A offenbart eine Schraube mit einem Kopf ohne Schlitz mit sphärischer Außenseite und kegelstumpfförmiger, dem Schaft zugewandter Innenseite, die mit einer Rändelung ausgestattet ist. Der Schaft verfügt über ein Außengewinde. Die Schraube kann als Hülsenschraube ausgebildet sein, indem der Schaft mit einer Innenbohrung mit einem Innengewinde ausgestattet wird.

Die Internet-Seite
KLYNGTSK 16 Stück Verbindung Schrauben Hülsen M4. In: Amazon Europe Core S.à.r.l. Bearbeitungsstand: vgl. S. 3, "Im Angebot von Amazon.de seit 11. Juni 2020". URL: https:llwww.amazon.de/KLYNGTSK-Verbindung-Verbindungsh%C3%BCIse-Abrei%C3%9Fschraube-Befestigung/dp/B08B7Y4XFR/ref=sr_1_8?keywords=h%C3%BCLsen schrauben+senkkopf&qid=1648543631&sprefix=h%C3%BCIsenschraube+senk-kop%2Caps%2C133&sr=8-8 [abgerufen am 29.03.2022*]*
offenbart nicht gattungsgemäße Schrauben mit zugeordneten Verbindungshülsen, wobei die Schrauben als Abreißschrauben ausgebildet sind, bei denen der Schaft Sollbruchstellen aufweist, im Bereich welcher die Länge des Schaftes bedarfsgerecht von dem Benutzer angepasst werden kann.

Die nicht gattungsgemäße Druckschrift US 4,557,654 A offenbart eine Abdeckkappe für den Endbereich eines Gewindeschaftes mit einer aufgeschraubten Mutter. Die Mutter verfügt über Sechskant-Angriffsflächen für einen Maulschlüssel, im Bereich welcher eine umlaufende zylindrische Nut angeordnet ist. Die Abdeckkappe verfügt einerseits über ein Innengewinde zum Aufschrauben auf das Gewinde der Schraube und andererseits über Vorsprünge, welche in die Umfangsnut einschnappen können. Die Abdeckkappe ist so flexibel, dass diese nach dem Aufschrauben auf das Gewinde über die Mutter umgestülpt werden kann.

Die nicht gattungsgemäße Druckschrift US 5,642,973 A offenbart eine Abdeckung für eine Reinigungsöffnung eines Installationssystems eines Gebäudes mittels einer Kappe. Eine Befestigung der Kappe an einem Vorsprung einer Abdeckplatte der Öffnung erfolgt durch das Aufpressen von elastischen Innenflanschen einer Hülse der Kappe auf den Vorsprung der Abdeckplatte.

Die nicht gattungsgemäße Druckschrift US 3,548,704 A betrifft ebenfalls eine Abdeckkappe für eine Mutter-Bolzen-Verbindung. Die Abdeckkappe weist eine Innenhülse auf, die in den freien Endbereichen Rippen aufweist, die zur Fixierung in das Gewinde des Bolzens eingreifen können.

### AUFGABE DER ERFINDUNG

Der vorliegenden Erfindung liegt die Aufgabe zugrunde,
- eine Handhabung eines Anbauturm-Außenkonusteils und/oder Anbauturm-Innenkonusteils und/oder
- die beständige Gewährleistung der erforderlichen Eigenschaften des Anbauturm-Außenkonusteils oder Anbauturm-Innenkonusteils und/oder
- die Möglichkeiten bei einem Transport und/oder einer Bevorratung des Anbauturm-Außenkonusteils oder Anbauturm-Innenkonusteils und/oder
- den Aufwand für einen Schutz des Anbauturm-Außenkonusteils oder Anbauturm-Innenkonusteils gegenüber Beeinträchtigungen
zu verbessern. Des Weiteren liegt der Erfindung die Aufgabe zugrunde, einen Anbauturmbaugruppe mit einem Anbauturm-Außenkonusteil oder einem Anbauturm-Innenkonusteil sowie ein Verfahren zur Handhabung einer Anbauturmbaugruppe entsprechend zu verbessern.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung beruht zunächst auf der Erkenntnis, dass es erforderlich sein kann, dass eine Außenkonusfläche eines Anbauturm-Außenkonusteils oder eine Innenkonusfläche eines Anbauturm-Innenkonusteils geschützt werden muss. Beispielsweise kann eine Konusfläche durch fräsende Bearbeitung hergestellt sein. Nach der fräsenden Herstellung der Konusfläche muss vermieden werden, dass es zu Verschmutzungen und/oder Beschädigungen der Konusfläche kommen kann, wobei Beschädigungen bspw. durch mechanische Einwirkungen und/oder durch Korrosion hervorgerufen werden können. Möglich ist auch, dass nach der Fertigung der Konusfläche das Anbauturm-Außenkonusteil oder Anbauturm-Innenkonusteil noch lackiert werden soll, wobei aber zu vermeiden ist, dass auch die Konusfläche mit lackiert wird.

Bekannt ist es, die Konusfläche zum Schutz einzufetten. Das Fett vermeidet die dauerhafte Ablagerung von Lack an der Konusfläche, kann mechanische Beschädigungen wie Kratzer an der Konusfläche zumindest verringern und schützt die Konusfläche gegen Korrosion. Nachteilig bei diesen Ausführungsformen ist aber, dass das Aufbringen des Fetts aufwändig ist, die Schutzwirkung des Fetts abhängig ist von der Sorgfalt der Person beim Aufbringen des Fetts, das Fett während der Handhabung des Anbauturm-Außenkonusteils oder Anbauturm-Innenkonusteils die Umgebung kontaminieren kann und für die Beseitigung des Fetts vor der Montage ein erhöhter Aufwand zu erbringen ist, wobei auch hohe Anforderungen an die Sorgfalt bei der Entfernung des Fetts gelten.

Für eine erste Lösung der Erfindung wird eine Anbauturm-Außenkonusabdeckkappe vorgeschlagen, die zum Schutz einer Außenkonusfläche an einem Anbauturm-Außenkonusteil befestigt werden kann. Hierbei kann das Anbauturm-Außenkonusteil ein die Außenkonusfläche ausbildendes Koppelelement sein, welches dann an einem Gurt oder Turm befestigt oder verschweißt werden kann, oder das Anbauturm-Außenkonusteil wird unmittelbar von dem Gurt oder Turm ausgebildet.

Die erfindungsgemäße Anbauturm-Außenkonusabdeckkappe verfügt über einen T-förmigen Längsschnitt. Der T-förmige Längsschnitt weist einen Vertikalschenkel sowie einen Horizontalschenkel auf.

Endbereiche des Horizontalschenkels sind als abgewinkelte Konusschenkel ausgebildet. Da diese Konusschenkel um die Längsachse umlaufen, begrenzen diese innenliegend eine Innenkonusfläche.

Der Vertikalschenkel des T-förmigen Längsschnitts weist einen Befestigungsbereich auf. Im Befestigungsbereich kann die Anbauturm-Außenkonusabdeckkappe an dem Anbauturm-Außenkonusteil befestigt werden. Hierbei erfolgt die Befestigung derart und bei derartiger relativer Anordnung der Anbauturm-Außenkonusabdeckkappe und des Anbauturm-Außenkonusteils, dass die Innenkonusfläche der Anbauturm-Außenkonusabdeckkappe an eine Außenkonusfläche des Anbauturm-Außenkonusteils angepresst wird. Für den Schutz der Außenkonusfläche ist somit lediglich die Befestigung der Anbauturm-Außenkonusabdeckkappe an dem Anbauturm-Außenkonusteil erforderlich. Die Anpressung der Innenkonusfläche der Anbauturm-Außenkonusabdeckkappe an der Außenkonusfläche des Anbauturm-Außenkonusteils gewährleistet dann im Bereich einer umlaufenden Kontakt- oder Dichtlinie, einer umlaufenden Kontakt- oder Dichtfläche oder im Idealfall über die gesamte Kontakt- oder Dichtfläche zwischen der Innenkonusfläche und der Außenkonusfläche einen Schutz und unter Umständen sogar eine Abdichtung der Außenkonusfläche gegenüber der Umgebung und etwaigen Beeinträchtigungen.

Für das Material, aus dem die Anbauturm-Außenkonusabdeckkappe hergestellt ist, gibt es im Rahmen der Erfindung vielfältige Möglichkeiten. Für einen Vorschlag der Erfindung ist die Anbauturm-Außenkonusabdeckkappe aus Kunststoff hergestellt. Hierbei kann ein beliebiger Kunststoff Einsatz finden, der auch anderweitige Partikel oder Fasen zur Beeinflussung der mechanischen und/oder chemischen Eigenschaften aufweisen kann. Für einen Vorschlag der Erfindung handelt es sich bei dem Kunststoff um Polypropylen (PP). Eine Herstellung der Anbauturm-Außenkonusabdeckkappe aus Kunststoff führt zu einem geringen Gewicht und geringen Herstellkosten. Andererseits kann mittels des Einsatzes von Kunststoff bereits eine gute Dämpfung oder ein guter Schutz bei stoßartigen mechanischen Beanspruchungen bereitgestellt werden. Möglich ist auch, dass (wie im Folgenden noch im Detail erläutert wird) die elastischen Eigenschaften des Kunststoffs für die Anbauturm-Außenkonusabdeckkappe vorteilhaft genutzt werden können.

Für die Herstellung der Anbauturm-Außenkonusabdeckkappe aus Kunststoff gibt es vielfältige Möglichkeiten. Für einen Vorschlag der Erfindung ist die Anbauturm-Außenkonusabdeckkappe in einem Spritzgussverfahren hergestellt. Hierbei kann in dem Spritzgussverfahren eine ein- oder mehrteilige Form verwendet werden und es kann ein ein- oder mehrteiliger Kern in dem Spritzgussverfahren und der verwendeten Form Einsatz finden. Möglich ist, dass in dem Spritzgussverfahren bereits die vollständige Fertigung der Anbauturm-Außenkonusabdeckkappe erfolgt. Durchaus möglich ist aber auch, dass an das Spritzgussverfahren weitere Bearbeitungsschritte (wie beispielsweise ein Schneiden eines Gewindes o. Ä) ausgeführt werden.

Die Erfindung umfasst eine beliebige Gestaltung des Befestigungsbereichs, mit dem die Anbauturm-Außenkonusabdeckkappe an dem Anbauturm-Außenkonusteil befestigt werden kann. Für einen Vorschlag der Erfindung weist der Befestigungsbereich ein Gewinde, ein Rastelement und/oder ein Verriegelungselement auf, welches mit einem Gegen-Gewinde, Gegen-Rastelement oder Gegen-Verriegelungselement des Anbauturm-Außenkonusteils verschraubbar, verrastbar und/oder verriegelbar ist.

Hierbei erfolgt die Herstellung der Verbindung mittels des Gewindes und Gegen-Gewindes durch Verschrauben.

Bei einer Verrastung hintergreift ein Rastelement formschlüssig ein Gegen-Rastelement, wobei das Rastelement und/oder das Gegen-Rastelement elastisch ausgebildet ist und eine Kontaktfläche des Rastelements mit dem Gegen-Rastelement gegenüber der Verrastungs- und Entrastungsrichtung eine Schrägfläche ist, die so geneigt ist, dass Verrastungskräfte oder Entrastungskräfte an der Schrägfläche Kräfte erzeugen, die unter Nutzung der Elastizität den Formschluss zwischen dem Rastelement und dem Verriegelungselement beseitigen.

Hingegen kann eine Verriegelung nicht unter Nutzung einer Elastizität gelöst werden. Ein Beispiel für eine im Rahmen der Erfindung einsetzbare Verriegelung ist eine sogenannte Bajonett-Verbindung, wobei auch ein Bajonettelement einer Bajonett-Verbindung mit unterschiedlichen Bajonett-Nuten in unterschiedlichen relativen Lagen verriegelt werden kann. Möglich ist dabei sogar, dass mindestens eine Bajonett-Nut gegenüber der Umfangsrichtung geneigt ist, sodass je nach Ausmaß der Bewegung des Bajonettelements entlang der Bajonett-Nut eine axiale Relativbewegung erfolgt, mittels welcher die Anpressung der Anbauturm-Außenkonusabdeckkappe an das Anbauturm-Außenkonusteil verändert wird.

Für einen Vorschlag der Erfindung ist der Vertikalschenkel als Rast- und/oder Gewindehülse ausgebildet. Beispielsweise kann der Vertikalschenkel im Bereich seiner äußeren Mantelfläche umlaufende Rippen oder ein Gewinde aufweisen, welches mit entsprechenden Nuten oder Gewindenuten verrastet werden können oder verschraubt werden können.

Für einen Vorschlag der Erfindung weist die Rast- und/oder Gewindehülse mindestens einen Schlitz auf. Über den Schlitz kann eine Beeinflussung der Elastizität der Rast- und/oder Gewindehülse erfolgen. Soll beispielsweise die Gewindehülse nicht ausschließlich mit einem Gegen-Gewinde eines die Außenkonusfläche aufweisenden Anbauturm-Außenkonusteils verschraubt werden können, sondern anfänglich auch ein Eindrücken mit einer Verrastung möglich sein, kann die Gewindehülse infolge des Schlitzes elastisch radial nachgeben, womit sich auch der Durchmesser der Gewindegänge der Gewindehülse verringert, so dass auch ohne Schraubbewegung die Gewindehülse in das Innengewinde des Anbauturm-Außenkonusteils eingefügt oder "eingeschlagen" werden kann, während dann am Ende der Einführbewegung eine zusätzliche Schraubbewegung genutzt werden kann.

Möglich ist, dass die Innenkonusfläche der Anbauturm-Außenkonusabdeckkappe denselben Konuswinkel aufweist wie der Konuswinkel der Außenkonusfläche des Anbauturm-Außenkonusteils. In diesem Fall liegen die genannten Konusflächen bereits ohne signifikante Anpresskraft vollflächig aneinander an. Andererseits erfordern die gleichen Konuswinkel u. U. eine Fertigung der Konusflächen mit einer hohen Präzision. Für einen anderen Vorschlag der Erfindung weist die Innenkonusfläche einen Konuswinkel auf, der kleiner ist als ein Konuswinkel der Außenkonusfläche des Anbauturm-Außenkonusteils. In diesem Fall weist die Anbauturm-Außenkonusabdeckkappe eine Elastizität derart auf, dass sich mit der Montage der Anbauturm-Außenkonusabdeckkappe an dem Anbauturm-Außenkonusteil und der Erzeugung einer Anpresskraft der Innenkonusfläche an die Außenkonusfläche die Innenkonusfläche so aufweitet, dass sich deren Konuswinkel an den Konuswinkel der Außenkonusfläche angleicht, womit dann ebenfalls eine vollflächige oder großflächige Anlage der Konusflächen gewährleistet ist.

Wie zuvor erwähnt kann eine Montage der Anbauturm-Außenkonusabdeckkappe an dem Anbauturm-Außenkonusteil beispielsweise zumindest teilweise durch ein Eindrücken oder "Einschlagen" erfolgen. Möglich ist auch, dass ein Verschrauben erfolgt, indem auf die Anbauturm-Außenkonusabdeckkappe mit der Hand die für das Verschrauben erforderlichen Kräfte aufgebracht werden. Für einen Vorschlag der Erfindung weist die Anbauturm-Außenkonusabdecckappe eine Angriffsfläche für ein Werkzeug auf. Bei dem Werkzeug kann es sich beispielsweise um einen Maulschlüssel, einen Schraubendreher u. ä. handeln mit entsprechender zugeordneter Ausgestaltung der Angriffsfläche. Vorzugsweise ist die Angriffsfläche als Innen-Sechskantfläche oder als Innen-Mehrkantfläche ausgebildet, in welche dann ein Sechskant- oder Mehrkantwerkzeug eingreifen kann, um ein Anzugsmoment für das Verschrauben aufzubringen.

Eine weitere Lösung der der Erfindung zugrunde liegenden Aufgabe stellt eine Anbauturmbaugruppe dar, bei der an einem Anbauturm-Außenkonusteil eine Anbauturm-Außenkonusabdecckappe, wie diese zuvor erläutert worden ist, gehalten ist. Hierbei können einzelne oder sämtliche der zuvor erläuterten Wechselwirkungen zwischen dem Anbauturm-Außenkonusteil und der Anbauturm-Außenkonusabdeckkappe an der Anbauturmbaugruppe verwirklicht sein.

Eine weitere Lösung der der Erfindung zugrunde liegenden Aufgabe stellt ein Verfahren zur Handhabung einer Anbauturmbaugruppe der zuvor erläuterten Art dar. Bei diesem Verfahren wird zunächst das Anbauturm-Außenkonusteil bereitgestellt. Beispielsweise handelt es sich dabei um die Bereitstellung eines Gurts oder eines Turms mit einer Außenkonusfläche. Hieran anschließend wird der Vertikalschenkel der Anbauturm-Außenkonusabdeckkappe in eine Ausnehmung, insbesondere eine Bohrung im Inneren der Außenkonusfläche, eingesetzt. Es erfolgt dabei die Herstellung einer Verbindung des Befestigungsbereichs der Anbauturm-Außenkonusabdecckappe mit dem Anbauturm-Außenkonusteil, was vorzugsweise im Inneren der genannten Bohrung erfolgt. Wie zuvor erläutert kann diese Verbindung mittels eines Verschraubens hergestellt werden. Ebenfalls möglich ist, dass das Einsetzen und Verbinden zunächst durch ein "ratschenartiges" Eindrücken erfolgt, indem unter Ausnutzung einer Elastizität, insbesondere durch Ausstattung einer Gewindehülse mit Schlitzen, Rastvorsprüngen, Rippen oder einem Gewinde, sukzessive mehrere Gegen-Rastvorsprünge, Gegen-Nuten oder einen Gegen-Gewindegang des Anbauturm-Außenkonusteils passiert werden. Nach einem derartigen ratschenartigen Einpressen kann am Ende des Einsetzens auch ein zusätzliches Verschrauben erfolgen, womit dann die Anpresskraft der Anbauturm-Außenkonusabdeckkappe an den Außenkonus des Anbauturm-Außenkonusteils erzeugt oder vergrößert wird. Möglich ist alternativ oder kumulativ, dass hierbei auch die erläuterte Aufweitung des Innenkonus der Anbauturm-Außenkonusabdeckkappe erfolgt. Ist auf diese Weise der Außenkonus des Anbauturm-Außenkonusteils mittels der Anbauturm-Außenkonusabdeckkappe geschützt, können an oder mit der Anbauturmbaugruppe Arbeitsschritte durchgeführt werden. Beispielsweise kann dann ein Lackieren des Anbauturm-Außenkonusteils erfolgen oder auch eine weitere Materialbearbeitung desselben, ohne dass es zu einer Kontaminierung der Außenkonusfläche mit dem Lack oder Materialspänen oder zu Beschädigungen der Außenkonusfläche kommt. Möglich ist auch, dass in dem derart geschützten Zustand ein Transport der Anbauturmbaugruppe und/oder eine Bevorratung der Anbauturmbaugruppe erfolgt, bis dann eine Montage der Anbauturmbaugruppe an einem Arbeitsfahrzeug erfolgt. Hierzu wird dann die Anbauturm-Außenkonusabdeckkappe wieder von dem Anbauturm-Außenkonusteil entfernt.

Die zuvor erläuterten Lösungen haben einen Schutz einer Außenkonusfläche eines Anbauturm-Außenkonusteils ermöglicht. Eine weitere Lösung der der Erfindung zugrunde liegenden Aufgabe schlägt eine Anbauturm-Abdeckkappen¬bau¬gruppe vor, mittels welcher eine Innenkonusfläche eines Anbauturm-Innenkonusteils geschützt werden kann. Das Anbauturm-Innenkonusteil kann hierbei ein an dem Gurt oder Turm gehaltenes oder mit diesem verbindbares Koppelelement sein oder das Anbauturm-Innenkonusteil ist der Gurt oder der Turm selber.

Die erfindungsgemäße Anbauturm-Abdeckkappen¬bau¬gruppe verfügt über zwei Deckelteile. Die beiden Deckelteile sind jeweils in einem Längsschnitt T-förmig ausgebildet und verfügen jeweils über einen Vertikalschenkel und einen Horizontalschenkel des T. Die beiden Deckelteile sind über ihre beiden Vertikalschenkel bei fluchtender Anordnung derselben miteinander verbindbar. Bei einer derartigen Verbindung der beiden Vertikalschenkel miteinander weist die Anbauturm-Abdeckkappen¬bau¬gruppe die Form eines liegenden H auf. Bei diesem H bilden die Vertikalschenkel der T-förmigen Deckelteile gemeinsam den Verbindungsschenkel des H, während die beiden Horizontalschenkel der T-förmigen Deckelteile die Vertikalschenkel des H bilden. In einem an ein Anbauturm-Innenkonusteil montierten Zustand erstreckt sich dann der Verbindungsschenkel des H im Inneren und entlang einer Symmetrieachse einer Innenkonusfläche des Anbauturm-Innenkonusteils. Die beiden Vertikalschenkel des H verschließen jeweils einen Endbereich der Innenkonusfläche, womit die Innenkonusfläche durch die Vertikalschenkel infolge einer etwaigen Abdichtung gegenüber einer Korrosion geschützt werden können und die Innenkonusfläche auch gegenüber Verunreinigungen oder mechanischen Beeinträchtigungen geschützt werden kann.

Für die Art der Verbindung der beiden Vertikalschenkel der T-förmigen Deckelteile gibt es im Rahmen der Erfindung vielfältige Möglichkeiten. Vorzugsweise erfolgt die Verbindung der beiden Vertikalschenkel der T-förmigen Deckelteile über eine Schraub-, Rast- und/oder Verriegelungsverbindung, für die grundsätzlich das zu der Schraubverbindung, Rastverbindung und Verriegelungsverbindung der Anbauturm-Außenkonusabdeckkappe Gesagte entsprechend gilt. Auch hier ist möglich, dass die Verbindung zunächst für eine Montage ein ratschenartiges Ineinanderstecken ermöglicht, während dann am Ende der Herstellung der Verbindung ein zusätzliches Verschrauben erfolgt.

Für einen Vorschlag der Erfindung weist mindestens ein Vertikalschenkel des T-förmigen Deckelteils eine Gewinde-, Rast- und/oder Verriegelungshülse auf. Eine derartige Gewinde-, Rast- und/oder Verriegelungshülse kann dann eine Außenfläche oder Innenfläche aufweisen, die das Gewinde, das Rastelement oder das Verriegelungselement ausbildet. Der Vertikalschenkel des T-förmigen Deckelteils kann dann aufgenommen sein in einer Innenbohrung des Vertikalschenkels des anderen T-förmigen Deckelteils oder selber innenliegend den anderen Vertikalschenkel aufnehmen, womit dann die Gewindeverbindung, Rastverbindung oder Verriegelungsverbindung zur Wirkung kommt.

Auch hier kann zur Gewährleistung einer erforderlichen Elastizität die Gewinde-, Rast- und/oder Verriegelungshülse mindestens einen Schlitz aufweisen. Wird für die erläuterten Ausführungsformen eine Gewinde-, Rast- und/oder Verriegelungshülse mit mindestens einem Schlitz ausgestattet, kann der Schlitz entgegen der Montagerichtung offen ausgebildet sein. Dies hat zur Folge, dass die von der Verriegelungshülse beidseitig des Schlitzes gebildeten "Federarme" am Beginn des Einführens eine große Länge aufweisen, so dass diese Federarme eine große Nachgiebigkeit aufweisen, so dass am Anfang ein einfaches ratschenartiges Eindrücken möglich ist. Mit zunehmendem Eintritt in die Gewinde-, Rast- und/oder Verriegelungshülse wird aber die wirksame Länge des Federarms immer kürzer, womit eine zunehmende Verringerung der Nachgiebigkeit erfolgt. Ein ratschenartiges Eindrücken erfordert somit eine immer größer werdende Einpresskraft, womit dann der Übergang zu dem Verschrauben erfolgen kann.

Für die Art der Verschließung des Endbereichs der Innenkonusfläche durch den Vertikalschenkel des H gibt es im Rahme der Erfindung unterschiedliche Möglichkeiten, die alternativ oder kumulativ zum Einsatz kommen können:
Für einen Vorschlag liegt eine Stirnseite eines Vertikalschenkels des H in dem zugeordneten Endbereich der Innenkonusfläche an der Innenkonusfläche an. Dies hat den Vorteil, dass die Innenkonusfläche nicht lediglich von außen verschlossen wird, sondern in ihrem Endbereich selbst. Unter Umständen ist damit auch eine flächenbündige Anordnung des Vertikalschenkels des H mit der Außenfläche des Anbauturm-Innenkonusteils möglich oder lediglich ein kleiner Überstand des Deckelteils gewährleistet. Soll diese Stirnseite des Vertikalschenkels des H nicht lediglich mit kleiner umlaufender Fläche oder sogar einem Linienkontakt an der Innenkonusfläche anliegen, kann die Stirnseite auch in einem Längsschnitt ballig oder konvex ausgebildet sein. Für einen Vorschlag der Erfindung ist die Stirnseite als (kegelstumpfförmige) Konusfläche ausgebildet. Hierbei kann der Konuswinkel dieser Konusfläche dem Konuswinkel der Innenkonusfläche entsprechen.

Für einen anderen Vorschlag ist ein Vertikalschenkel des H in dem zugeordneten Endbereich der Innenkonusfläche an einer Außenfläche des Anbauturm-Innenkonusteils abgestützt, die an den Endbereich der Innenkonusfläche angrenzt. Ist das Anbauturm-Innenkonusteil beispielsweise ein Blechteil, in welche der Innenkonus eingefräst ist, erfolgt die Abstützung an der Außenfläche des Blechteils im Bereich einer Ringfläche, die die Innenkonusfläche umgibt. In diesem Fall ist die Außenfläche vorzugsweise quer zu dem Verbindungsschenkel ausgebildet. Die Anlage des Vertikalschenkels des H an der Außenfläche erfolgt dann nicht mit der Stirnseite, sondern einer Seitenfläche des Vertikalschenkels des H.

Auch in diesem Fall kann eine Angriffsfläche für ein Werkzeug (insbesondere eine Innen-Sechskantfläche oder eine Innen-Mehrkantfläche) vorhanden sein, die dann an mindestens einem Deckelteil (vorzugsweise beiden Deckelteilen) vorgesehen sein kann.

Die Längserstreckung der Vertikalschenkel der Deckelteile und die daran angeordneten Verbindungsbereiche geben vor, für welche Erstreckung des Verbindungsschenkels und damit für welche Abstände der Vertikalschenkel des H eine Verbindung erfolgen kann. Damit gibt diese Länge auch vor, welche Fertigungstoleranzen für die Innenkonusfläche ausgeglichen werden können. Möglich ist sogar, dass je nach Länge der Vertikalschenkel auch eine Verwendung derselben Anbauturm-Abdeckkappenbaugruppe für unterschiedliche Innenkonusflächen, nämlich Innenkonusflächen mit demselben Konuswinkel aber unterschiedlicher Tiefen der Innenkonusflächen, möglich ist.

Für einen weiteren Vorschlag zur Lösung der der Erfindung zugrunde liegenden Aufgabe schlägt die Erfindung ein Set vor. Dieses Set verfügt einerseits über eine Anbauturm-Abdeckkappenbaugruppe, wie diese zuvor erläutert worden ist. Diese Anbauturm-Abdeckkappenbaugruppe verfügt damit über die beiden Deckelteile, wobei die Deckelteile jeweils Vertikalschenkel mit bestimmten Längen aufweist, die dann auch für unterschiedliche, mit den Längen korrelierende Tiefen der Innenkonusflächen montiert werden können. In dem Set ist aber dann ein weiteres Deckelteil vorhanden, dessen Vertikalschenkel eine andere Länge aufweist als ein entsprechendes Deckelteil der beiden Deckelteile der Anbauturm-Abdeckkappenbaugruppe. In diesem Fall kann dann das entsprechende Deckelteil wahlweise mit einem Deckelteil mit der passenden der beiden Längen kombiniert werden, um dann passend für das Abdecken einer Konusinnenfläche mit einer spezifischen Tiefe ausgebildet zu sein. Mit den dann mindestens drei Teilen des Sets kann somit die Spanne der Tiefen der Innenkonusflächen, die mit dem Set geschützt werden können, vergrößert werden.

Eine weitere Lösung der der Erfindung zugrunde liegenden Aufgabe stellt eine Anbauturmbaugruppe dar, die einerseits über ein Anbauturm-Innenkonusteil und andererseits eine daran gehaltene Anbauturm-Abdeckkappenbaugruppe verfügt, wie diese zuvor erläutert worden ist. Auch hier können einzelne oder sämtliche der zuvor erläuterten Wechselwirkungen zwischen den Anbauturm-Innenkonusteil und der Anbauturm-Abdeckkappenbaugruppe genutzt werden.

Eine weitere Lösung der der Erfindung zugrunde liegenden Aufgabe stellt ein Verfahren zur Handhabung einer Anbauturmbaugruppe dar, bei der zunächst ein Anbauturm-Innenkonusteil bereitgestellt wird. Hierbei kann es sich um ein Koppelelement mit einer Innenkonusfläche handeln, welches an einem Gurt oder einem Turm befestigt oder verschweißt werden kann. Möglich ist aber auch, dass das Anbauturm-Innenkonusteil der Gurt oder der Turm ist, welcher dann selber die Innenkonusfläche aufweist.

In dem Verfahren erfolgt ein Einsetzen eines der Deckelteile von einer Seite der Innenkonusfläche des Anbauturm-Innenkonusteils. Hieran schließend erfolgt ein Einsetzen des anderen Deckelteils von der anderen Seite der Innenkonusfläche des Anbauturm-Innenkonusteils. Es erfolgt dann eine Verbindung der Vertikalschenkel der T-förmigen Deckelteile miteinander in einer Montagestellung, in der die Horizontalschenkel der T-förmigen Deckelteile jeweils einen Endbereich der Innenkonusfläche verschließen, wie dies zuvor erläutert worden ist. Hierbei kann die Herstellung der Verbindung bspw. durch ratschenartiges Einstecken und/oder Verschrauben erfolgen. Ist derart eine Verbindung hergestellt worden und sind die Endbereiche der Innenkonusfläche derart verschlossen, kann eine Durchführung der Arbeitsschritte an der Anbauturmbaugruppe, insbesondere ein fräsendes Bearbeiten, ein Lackieren u. ä., erfolgen. Alternativ oder zusätzlich kann ein Transport der Anbauturmbaugruppe und/oder eine Bevorratung der Anbauturmbaugruppe erfolgen. Während dieser Schritte ist dann die Innenkonusfläche zuverlässig durch die beiden Deckelteile gegenüber Verunreinigungen, einer Korrosion und mechanischen Beschädigungen geschützt. Hieran anschließend erfolgt dann die Beseitigung der beiden Deckelteile, was vorzugsweise unmittelbar vor der Montage des Anbauturm-Innenkonusteils an dem Arbeitsfahrzeug erfolgt.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 bis 5**: zeigen eine Anbauturm-Außenkonusabdeckkappe (Fig. 1: Längsschnitt; Fig. 2: Ansicht von oben; Fig. 3: Ansicht von der Seite; Fig. 4: Ansicht von unten; Fig. 5: räumliche Ansicht);
- **Fig. 6**: zeigt eine Anbauturmbaugruppe, bei der eine Anbauturm-Außenkonusabdeck-kappe gemäß Fig. 1 bis 5 an einem Anbauturm-Außenkonusteil befestigt ist, in einer Seitenansicht.
- **Fig. 7**: zeigt die Anbauturmbaugruppe gemäß Fig. 6 in einem Schnitt VII-VII.
- **Fig. 8 bis 11**: zeigen ein erstes Deckelteil einer Anbauturm-Abdeckkappenbaugruppe (Fig. 8: Längsschnitt; Fig. 9: Ansicht von oben; Fig. 10: Seitenansicht; Fig. 11: Ansicht von unten).
- **Fig. 12 und 13**: zeigen ein zweites Deckelteil der Anbauturm-Abdeckkappenbaugruppe (Fig. 12: Längsschnitt; Fig. 13: räumliche Ansicht).
- **Fig. 14 und 15**: zeigen eine andere Ausgestaltung des zweiten Deckelteils gemäß Fig. 12 und 13 (Fig. 14: Längsschnitt; Fig. 15: räumliche Ansicht).
- **Fig. 16 und 17**: zeigen eine Anbauturm-Abdeckkappenbaugruppe mit einem ersten Deckelteil gemäß Fig. 8 bis 11 und einem zweiten Deckelteil gemäß Fig. 12 und 13 (Fig. 16: Seitenansicht; Fig. 17: geschnittene Darstellung XVII-XVII).
- **Fig. 18**: zeigt in einer geschnittenen Darstellung eine Anbauturm-Abdeckkappenbau-gruppe mit einem ersten Deckelteil gemäß Fig. 8 bis 11 und einem zweiten Deckelteil gemäß Fig. 14 und 15.
- **Fig. 19**: zeigt eine Verbindungsmöglichkeit für eine Verbindung eines Befestigungsbereichs einer Anbauturm-Innenkonusabdeckkappe gemäß Fig. 1 bis 5 mit einem Anbauturm-Außenkonusteil oder für die Verbindung des Deckelteils gemäß Fig. 8 bis 11 mit dem Deckelteil gemäß Fig. 12 und 13 bzw. Fig. 14 und 15.

### FIGURENBESCHREIBUNG

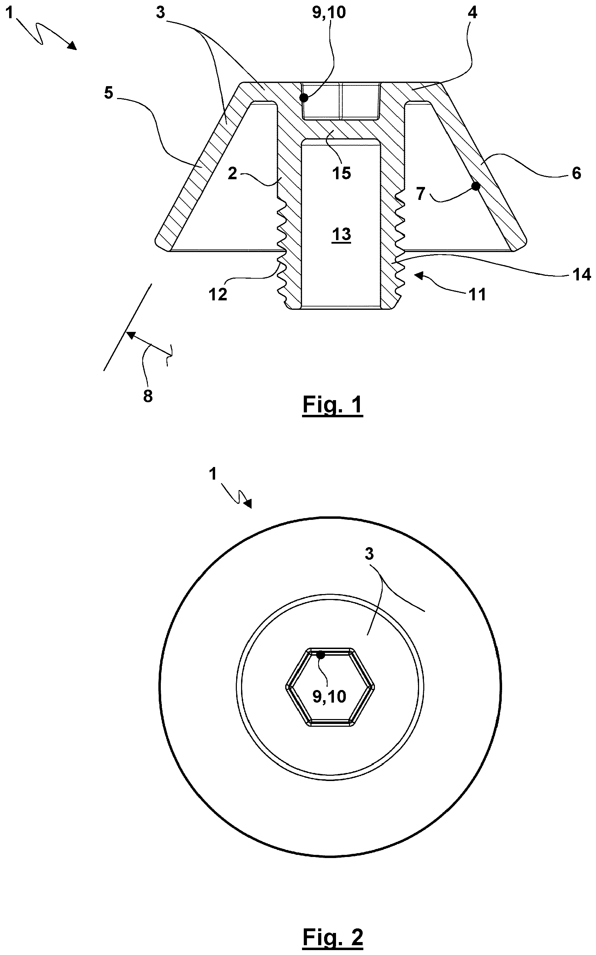

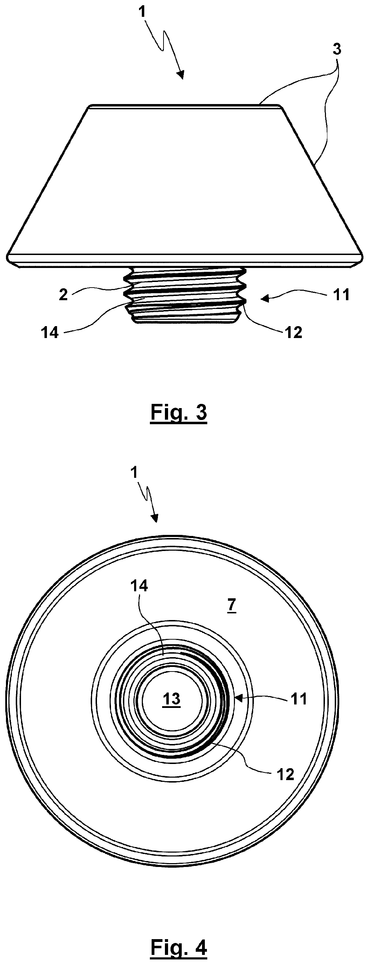

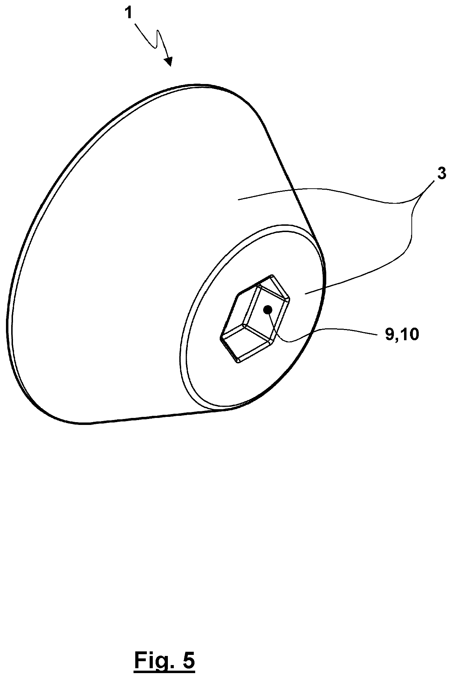

**Fig. 1 bis 5** zeigen eine Anbauturm-Außenkonusabdeckkappe 1. Die Anbauturm-Außenkonusabdeckkappe verfügt gemäß Fig. 1 über einen in erster Näherung T-förmigen Längsschnitt. Der T-förmige Längsschnitt verfügt über einen Vertikalschenkel 2 und einen Horizontalschenkel 3.

Der Horizontalschenkel 3 verfügt über einen mittigen Teilschenkel 4 und außenliegende, abgewinkelte Konusschenkel 5, 6. Die Konusschenkel 5, 6 begrenzen eine um die Längsachse umlaufende (kegelstumpfförmige) Innenkonusfläche 7. Die Innenkonusfläche 7 weist einen Konuswinkel 8 auf. Im Bereich der oberen Stirnseite und des Teilschenkels 4 verfügt die Anbauturm-Außenkonusabdeckkappe 1 über eine Angriffsfläche 9 für ein Werkzeug, welche hier als Innen-Mehrkantfläche 10 ausgebildet ist.

Der Vertikalschenkel 2 der Anbauturm-Außenkonusabdeckkappe 1 verfügt über einen Befestigungsbereich 11. Für das dargestellte Ausführungsbeispiel verfügt der Befestigungsbereich 11 im Bereich seiner äußeren Mantelfläche über ein Gewinde 12. Für das dargestellte Ausführungsbeispiel weist der Vertikalschenkel 2 in dem dem Horizontalschenkel 3 abgewandten Endbereich eine als Sacklochbohrung ausgebildete Ausnehmung 13 auf. Somit bildet der Vertikalschenkel 2 hier eine das Gewinde 12 bereitstellende Gewindehülse 14.

Die Längserstreckung des Vertikalschenkels 2 einerseits und der Konuswinkel 8 und die Länge der Konusschenkel 5, 6 andererseits sind derart gewählt, dass sich der Befestigungsbereich 11 mit dem Gewinde 12 zumindest teilweise nach unten aus der Innenkonusfläche 7 heraus erstreckt, so dass zumindest ein Endbereich des Gewindes 12 frei zugänglich ist. Ohne dass dies zwingend der Fall ist, verfügen die Konusschenkel 5, 6 über eine in Richtung ihrer Längserstreckung konstante Wandstärke. Für das dargestellte Ausführungsbeispiel variiert insgesamt die Wandstärke der Anbauturm-Außenkonusabdeckkappe 1 im Bereich der Gewindehülse 14, des Horizontalschenkels 3 mit dem Teilschenkel 4 und der Konusschenkel 5, 6 und im Bereich eines Bodens 15 zwischen der Angriffsfläche 9 und der Ausnehmung 13 maximal um 20 % oder maximal um 10 %. Für das dargestellte Ausführungsbeispiel ist die Anbauturm-Außenkonusabdeckkappe 1 (bis auf die Angriffsfläche 9 und das Gewinde 12) rotationssymmetrisch zu ihrer Längsachse.

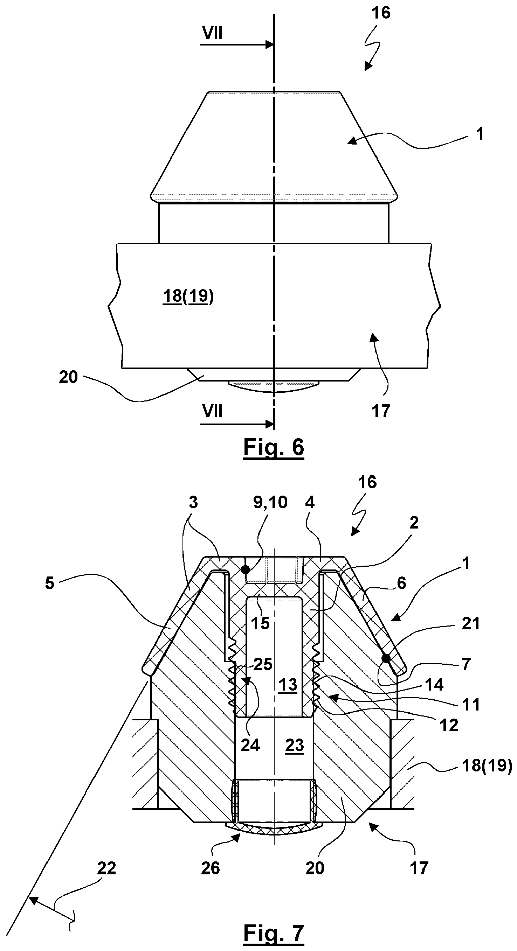

**Fig. 6 und 7** zeigen eine Anbauturmbaugruppe 16, bei der die Anbauturm-Außenkonusabdecckappe 1 gemäß Fig. 1 bis 5 an einem Anbauturm-Außenkonusteil 17 befestigt ist. Das Anbauturm-Außenkonusteil 17 besteht für das dargestellte Ausführungsbeispiel aus einem Gurt 18 (oder für eine andere Ausführungsform einem Turm 19), an dem ein Koppelelement 20 befestigt, insbesondere angeschweißt ist. Das Koppelelement 20 verfügt über eine Außenkonusfläche 21. Möglich ist, dass ein Konuswinkel 22 der Außenkonusfläche 21 des Anbauturm-Außenkonusteils 17 dem Konuswinkel 8 der Innenkonusfläche 7 der Anbauturm-Außenkonusabdeckkappe 1 entspricht. Vorzugsweise ist aber der Konuswinkel 22 geringfügig größer, insbesondere im Bereich von 1° bis 5° oder im Bereich von 2° bis 4°, größer als der Konuswinkel 8. So kann beispielsweise der Konuswinkel 22 ein Winkel von 60° sein, während der Konuswinkel 8 ein Winkel von 57° ist.

Das Koppelelement 20 verfügt über eine durchgehende Innenbohrung 23, im Bereich welcher ein Gegen-Befestigungsbereich 24 vorgesehen ist. Durch Wechselwirkung des Befestigungsbereichs 11 der Anbauturm-Außenkonusabdeckkappe 1 mit dem Gegen-Befestigungsbereich 24 des Anbauturm-Außenkonusteils 17 kann eine Verbindung zwecks Befestigung der Anbauturm-Außenkonusabdeckkappe 1 an dem Koppelelement 20 erfolgen. Für das dargestellte Ausführungsbeispiel verfügt der Gegen-Befestigungsbereich 24 im Bereich der Innenfläche über ein Gegen-Gewinde 25, welches mit dem Gewinde 12 verschraubbar ist.

Eine Verwendung der Anbauturm-Außenkonusabdeckkappe 1 in Verbindung mit einem Anbauturm-Außenkonusteil 17 erfolgt wie folgt:
Zunächst wird ein Anbauturm-Außenkonusteil 17 bereitgestellt. Bei Ausrichtung der Längsachse der Anbauturm-Außenkonusabdeckkappe 1 koaxial zu einer Längsachse der Innenbohrung 23 des Anbauturm-Außenkonusteils 17, hier der Schraubachse des Gegen-Gewindes 25, wird die Anbauturm-Außenkonusabdeckkappe 1 von oben auf das Anbauturm-Außenkonusteil 17 aufgesetzt und es erfolgt durch Verdrehung der Anbauturm-Außenkonusabdeckkappe 1 gegenüber dem Anbauturm-Außenkonusteil 17 eine Verschraubung des Gewindes 12 mit dem Gegen-Gewinde 25. Hierbei kann ein Schraubmoment über die Angriffsfläche 9 aufgebracht werden. Mit dem Erreichen der Endstellung gemäß Fig. 7 legt sich die Innenkonusfläche 7 der Anbauturm-Außenkonusabdeckkappe 1 vollflächig an die Außenkonusfläche 21 des Anbauturm-Außenkonusteils 17 an. Für den Fall, dass der Konuswinkel 22 der Außenkonusfläche 21 größer ist als der Konuswinkel 8 der Innenkonusfläche 7, führt das Anzugsmoment dazu, dass eine elastische Verformung der Anbauturm-Außenkonusabdeckkappe 1 erfolgt, bis die vollflächige Anlage der Innenkonusfläche 7 an die Außenkonusfläche 21 herbeigeführt ist. Möglich ist hierbei, dass eine elastische Verformung der Anbauturm-Außenkonusabdeckkappe 1 erfolgt, was vorzugsweise im Bereich des Teilschenkels 4 und/oder im Bereich der Konusschenkel 5, 6 erfolgt. Über die Gestaltung der Elastizität des Horizontalschenkels 3, der Wandstärke des Horizontalschenkels 3 und den Verlauf der Wandstärke des Horizontalschenkels 3 kann beeinflusst werden, welche Anpresskräfte an welcher Stelle im Bereich der Kontaktfläche zwischen der Außenkonusfläche 21 und der Innenkonusfläche 7 wirken.

Zu erkennen ist, dass die Innenbohrung 23 des Anbauturm-Außenkonusteils 17 auf der der Anbauturm-Außenkonusabdeckkappe 1 abgewandten Seite durch eine Verschlusskappe 26 abgedichtet ist, wobei die Verschlusskappe 26 als genormte Verschlusskappe ausgebildet sein kann.

Ist die Außenkonusfläche 21 des Anbauturm-Außenkonusteils 17 wie in Fig. 6 und 7 dargestellt durch die Anbauturm-Außenkonusabdeckkappe 1 geschützt, können die erforderlichen Arbeitsschritte an der Anbauturmbaugruppe 16 durchgeführt werden, beispielsweise eine fräsende Nachbearbeitung, eine Herstellung von weiteren Bohrungen oder Ausnehmungen an dem Anbauturm-Außenkonusteil 17, ein Anschweißen von weiteren Bauelementen an das Anbauturm-Außenkonusteil 17, ein Lackieren u. ä. Möglich ist auch, dass ein Transport der Anbauturmbaugruppe 16 erfolgt oder die Bevorratung derselben, bis eine Montage des Anbauturm-Außenkonusteils 17 an dem Arbeitsfahrzeug erfolgt. Hierzu muss die Anbauturm-Außenkonusabdeckkappe 1 (und die Verschlusskappe 26) dann wieder entfernt werden. Dies kann durch Abschrauben der Anbauturm-Außenkonusabdeckkappe 1 erfolgen. Möglich ist aber auch, dass dies durch Zerstörung der Anbauturm-Außenkonusabdeckkappe 1 erfolgt oder durch Herausschlagen derselben aus der Innenbohrung 23, indem in Fig. 7 von unten ein Werkzeug in die Innenbohrung 23 eingeführt wird und mit dem Werkzeug auf die untere Stirnseite der Anbauturm-Außenkonusabdeckkappe 1 geschlagen wird.

Möglich ist, dass die Gewindehülse 14 im Bereich des Gewindes 12 oder sogar hierüber hinaus in Längsrichtung orientierte Schlitze aufweist, die von dem freien Endbereich der Gewindehülse 14 ausgehen, so dass die Schlitze auf der dem Horizontalschenkel 3 abgewandten Seite offen sind. Diese Schlitze erhöhen die Elastizität der Gewindehülse 14, indem Gewindesegmente von Federarmen ausgebildet sind, die in Umfangsrichtung durch die Schlitze begrenzt sind. Eine derartige Schwächung der Gewindehülse 14 kann genutzt werden, um vor einem Festdrehen der Anbauturm-Außenkonusabdeckkappe 1 in deren Endstellung auch ein Hereindrücken der Anbauturm-Außenkonusabdeckkappe 1 in das Anbauturm-Außenkonusteil 17 oder ein Hereinschlagen zu ermöglichen, bei dem das Gewinde 12 der Anbauturm-Außenkonusabdeckkappe 1 "ratschenartig" entlang der Gewindegänge des Gegen-Gewindes 25 springt.

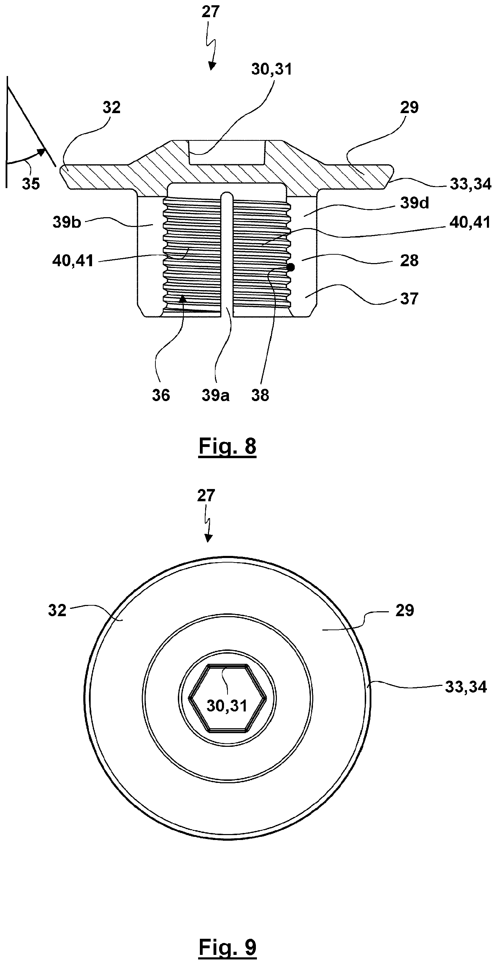

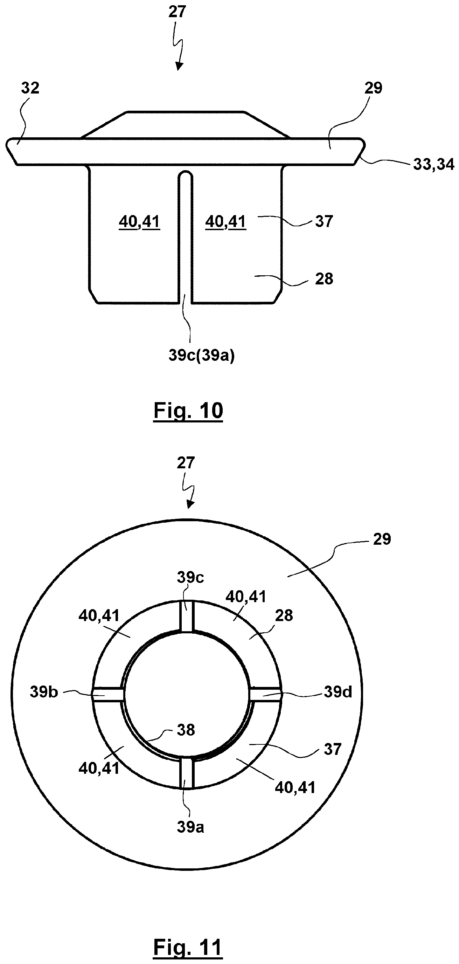

**Fig. 8 bis 11** zeigen ein erstes Deckelteil 27. Das Deckelteil 27 ist in dem in Fig. 8 dargestellten Längsschnitt T-förmig ausgebildet mit einem Vertikalschenkel 28 und einem Horizontalschenkel 29.

Im Bereich des Horizontalschenkels 29 verfügt das Deckelteil 27 über eine Angriffsfläche 30 für ein Werkzeug. Für das dargestellte Ausführungsbeispiel ist die Angriffsfläche 30 als Innen-Mehrkantfläche 31 ausgebildet. Der Horizontalschenkel 29 ist hier geradlinig ausgebildet. Im Endbereich 32 verfügt der Horizontalschenkel 29 über eine Stirnfläche 33. Für das dargestellte Ausführungsbeispiel ist die Stirnfläche 33 als Konusfläche 34 ausgebildet, die einen Konuswinkel 35 aufweist.

Der Vertikalschenkel 28 des Deckelteils 27 bildet einen Befestigungsbereich 36 aus. Für das dargestellte Ausführungsbeispiel ist der Befestigungsbereich 36 als Gewindehülse 37 ausgebildet, die im Bereich ihrer Innenfläche ein Gewinde 38 aufweist. Die Gewindehülse 37 verfügt über hier gleichmäßig in Umfangsrichtung verteilte Schlitze 39a, 39b, 39c, 39d. Die Schlitze 39 gehen von der dem Horizontalschenkel 29 abgewandten Stirnseite der Gewindehülse 37 aus, erstrecken sich parallel zur Längsachse des Deckelteils 27 und über den gesamten Vertikalschenkel 28 bis hin zu dem Horizontalschenkel 29. Zwischen benachbarten Schlitzen 39 bildet das Gewinde 38 Federarme 40 mit Gewindeteilabschnitten 41. Die Gewindeteilabschnitte 41 können radial nach außen auffedern.

Das Deckelteil 27 ist (bis auf das Gewinde 38, die Schlitze 39 und die Angriffsfläche 30) rotationssymmetrisch zur Längsachse ausgebildet.

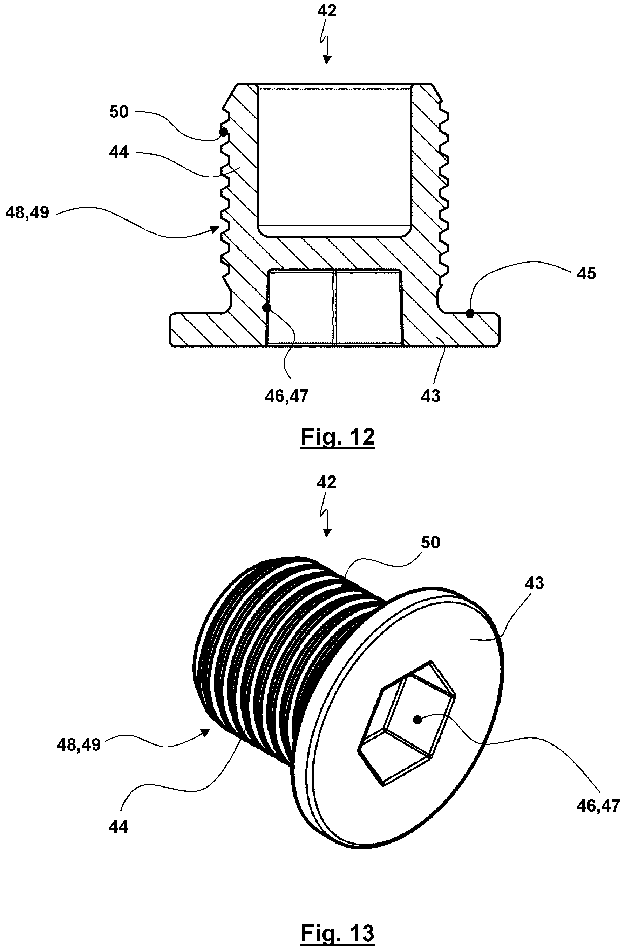

**Fig. 12 und 13** zeigen ein zweites Deckelteil 42, welches als eine Art Schraube ausgebildet ist. Das Deckelteil 42 verfügt über einen T-förmigen Längsschnitt, wobei in der Darstellung gemäß Fig. 12 das T auf dem Kopf steht. Der T-förmige Längsschnitt des Deckelteils 42 verfügt über einen Horizontalschenkel 43 sowie einen Vertikalschenkel 44.

Der Horizontalschenkel 43 ist geradlinig ausgebildet. Der Horizontalschenkel 43 bildet auf der dem Vertikalschenkel 44 zugewandten Seite eine hier ringförmige Abstützfläche 45 aus. Das Deckelteil 42 verfügt im Bereich des Horizontalschenkels 43 über eine Angriffsfläche 46, die auch hier als Innen-Mehrkantfläche 47 ausgebildet ist.

Der Vertikalschenkel 44 des Deckelteils 42 verfügt über einen Befestigungsbereich 48. Für das dargestellte Ausführungsbeispiel ist der Befestigungsbereich 48 als Gewindehülse 49 ausgebildet, die im Bereich ihrer Außenfläche ein Gewinde 50 aufweist.

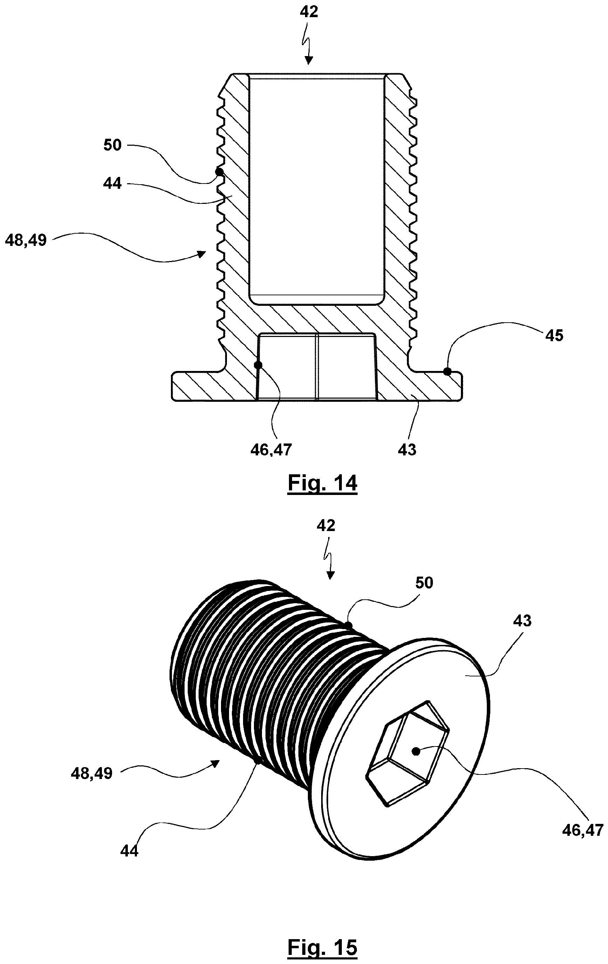

In den **Fig. 14 und 15** ist ein Deckelteil 42 dargestellt, welches grundsätzlich dem Deckelteil 42 gemäß Fig. 12 und 13 entspricht. Allerdings verfügt hier der Vertikalschenkel 44 und die Gewindehülse 49 mit dem Gewinde 50 über eine größere Längserstreckung.

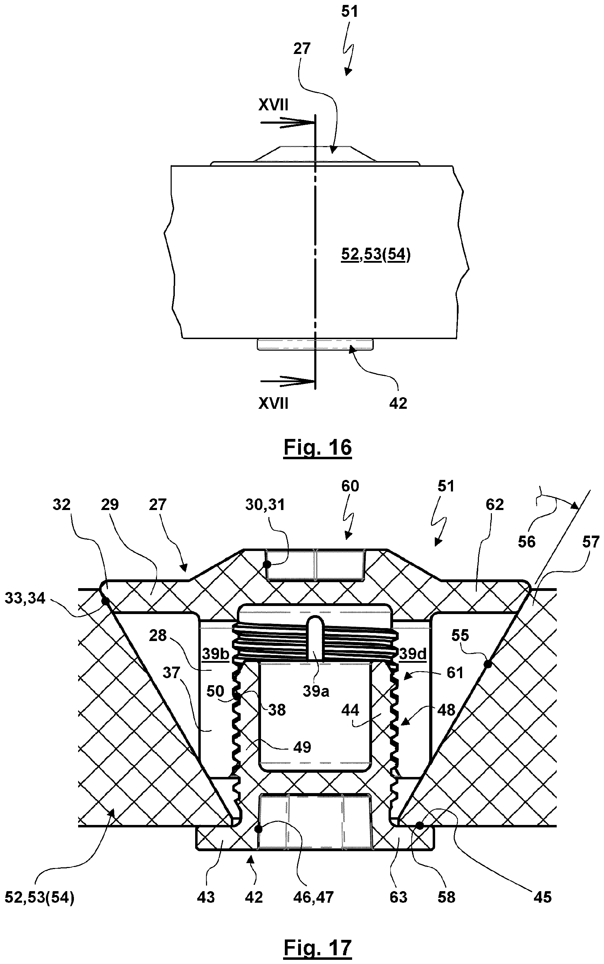

**Fig. 16 und 17** zeigen eine Anbauturmbaugruppe 51. Die Anbauturmbaugruppe 51 weist ein Anbauturm-Innenkonusteil 52 auf. Das Anbauturm-Innenkonusteil 52 kann als Koppelelement ausgebildet sein, welches mit einem Gurt oder Turm verbunden wird, insbesondere durch Verschweißen. Für das in den Fig. 16 und 17 dargestellte Ausführungsbeispiel ist das Anbauturm-Innenkonusteil 52 unmittelbar als Turm 53 ausgebildet, wobei aber auch möglich ist, dass dieses als Gurt 54 ausgebildet ist. Der Turm 53 (oder Gurt 54) weist eine Innenkonusfläche 55 mit einem Konuswinkel 56 auf. Hierbei ist die Innenkonusfläche 55 durchgehend und nach beiden Seiten offen.

In der Anbauturmbaugruppe 51 ist die Innenkonusfläche 55 beidseitig durch die beiden Deckelteile 27, 42 geschlossen. Das Deckelteil 27 ist dazu in eine Richtung entgegen der Öffnung der Innenkonusfläche 55 an diese angenähert. In der dargestellten Montagestellung liegt die Stirnfläche 33, insbesondere die Konusfläche 34, flächig an der Innenkonusfläche 55 im außenliegenden Endbereich 57 derselben an. Zu diesem Zweck verfügen vorzugsweise die Konusfläche 34 und die Innenkonusfläche 55 über denselben Konuswinkel. Der Vertikalschenkel 28 mit der Gewindehülse 37 des Deckelteils 27 erstreckt sich innerhalb der Innenkonusfläche 55 und koaxial zu der Längsachse der Innenkonusfläche 55.

Das Deckelteil 42 wird von der Seite der Innenkonusfläche 55 mit dem kleineren Durchmesser mit dem Vertikalschenkel 44 in die Innenkonusfläche 55 eingebracht. In der dargestellten Montagestellung liegt das Deckelteil 42 mit der Abstützfläche 45 an einer Außenfläche 58 benachbart der Innenkonusfläche 55 mit einer kreisringförmigen Kontaktfläche an. Eine Verbindung der Deckelteile 27, 42 erfolgt durch Verbindung der Befestigungsbereiche 36, 48. Dies kann zunächst für eine ratschenartige Einführbewegung erfolgen, bei der die Gewindeteilabschnitte 41 des Gewindes 38 elastisch radial nach innen einfedern, womit die Gewindegänge der Gewinde 38, 50 übersprungen werden können. Nach einem derartigen Einschieben für eine Art Vormontage kann dann ein Verschrauben der Deckelteile 27, 42 erfolgen, wozu geeignete Werkzeuge an den Angriffsflächen 30, 46 angreifen können. Bei Applikation eines ausreichenden Anzugsmoments wird an den Kontaktflächen einerseits der Konusfläche 34 des Deckelteils 27 mit der Innenkonusfläche 55 und andererseits der Abstützfläche 45 des Deckelteils 42 mit der Außenfläche 58 des Anbauturm-Innenkonusteils 52 eine Abdichtung und Schutzwirkung für die Innenkonusfläche 55 gewährleistet.

Die beiden Deckelteile 27, 42 bilden eine Anbauturm-Abdeckkappenbaugruppe 60, mit der eine Innenkonusfläche 55 des Turms 53 oder Gurts 54 geschützt werden kann.

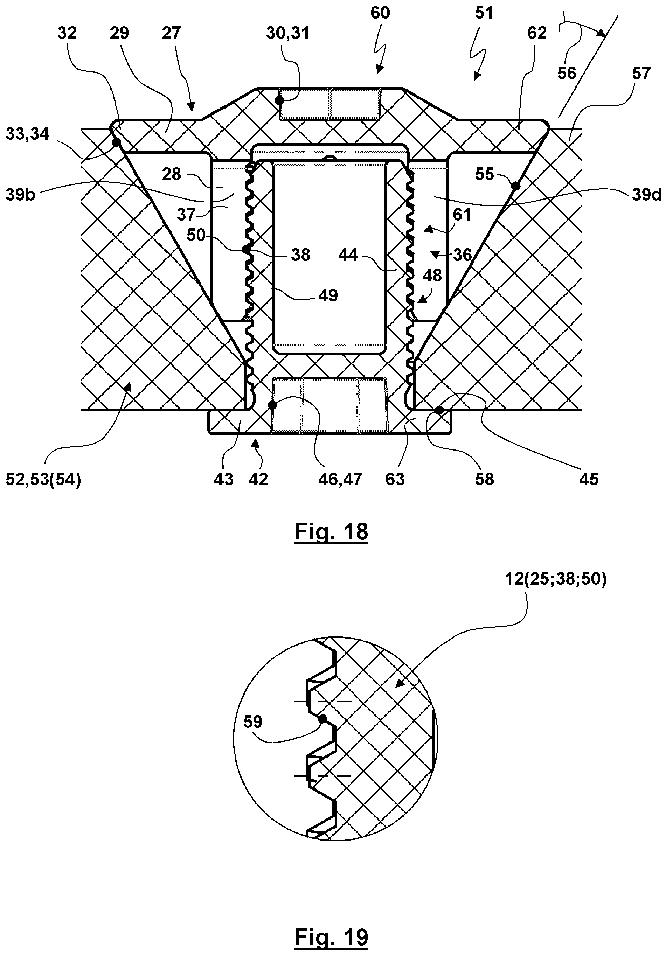

Verfügt das Anbauturm-Innenkonusteil 52 über eine andere Dicke, wie dies in Fig. 18 dargestellt ist, kann eine Innenkonusfläche 55 dennoch mit demselben Deckelteil 27 geschützt werden, während dann ein Deckelteil 42 gemäß Fig. 14 und 15 mit einer größeren Längserstreckung des Vertikalschenkels 44 und der Gewindehülse 49 zum Einsatz kommen kann. Auf diese Weise kann die Zahl der gleichen Teile für eine Ermöglichung eines Schutzes unterschiedlicher Innenkonusflächen erhöht werden. Es kann somit ein Set mit einem Deckelteil 27 und mindestens zwei Deckelteilen 42 mit unterschiedlichen Längserstreckungen verwendet werden.

In **Fig. 17** **und** **18** bildet die Anbauturm-Abdeckkappenbaugruppe 60 eine Art liegendes H. Hierbei ist der Verbindungsschenkel 61 des H von den beiden miteinander verbundenen Vertikalschenkeln 28, 44 gebildet, während die Vertikalschenkel 62, 63 des H von den Horizontalschenkeln 29, 43 der Deckelteile 27, 42 gebildet sind. Das Anbauturm-Innenkonusteil 42 ist zwischen den beiden Vertikalschenkeln 62, 63 der Anbauturm-Abdeckkappenbaugruppe 60 gefangen.

Fig. 19 zeigt beispielhaft eine Ausgestaltung, wie diese für das Gewinde 12, das Gegen-Gewinde 25, das Gewinde 38 oder das Gewinde 50 zum Einsatz kommen können. Beispielsweise kann ein Trapezgewinde oder ein herkömmliches Gewinde Einsatz finden. Die Schrägflächen 59 des Gewindes führen bei einem ratschenartigen Einpressen zu der Erzeugung einer Radialkraftkomponente, die ein radiales Auf- oder Einfedern der Gewindeteilabschnitte (beispielsweise Gewindeteilabschnitt 41) bewirken können. Über die Wahl des Neigungswinkels der Schrägfläche 59 kann die erforderliche Einführkraft für das ratschenartige Einschieben beeinflusst werden.

### BEZUGSZEICHENLISTE

- 1: Anbauturm-Außenkonusabdeckkappe
- 2: Vertikalschenkel
- 3: Horizontalschenkel
- 4: Teilschenkel
- 5: Konusschenkel
- 6: Konusschenkel
- 7: Innenkonusfläche
- 8: Konuswinkel
- 9: Angriffsfläche
- 10: Innen-Mehrkantfläche
- 11: Befestigungsbereich
- 12: Gewinde
- 13: Ausnehmung
- 14: Gewindehülse
- 15: Boden
- 16: Anbauturmbaugruppe
- 17: Anbauturm-Außenkonusteil
- 18: Gurt
- 19: Turm
- 20: Koppelelement
- 21: Außenkonusfläche
- 22: Konuswinkel
- 23: Bohrung
- 24: Gegen-Befestigungsbereich
- 25: Gegen-Gewinde
- 26: Verschlusskappe
- 27: Deckelteil
- 28: Vertikalschenkel
- 29: Horizontalschenkel
- 30: Angriffsfläche
- 31: Innen-Mehrkantfläche
- 32: Endbereich
- 33: Stirnfläche
- 34: Konusfläche
- 35: Konuswinkel
- 36: Befestigungsbereich
- 37: Gewindehülse
- 38: Gewinde
- 39: Schlitz
- 40: Federarm
- 41: Gewindeteilabschnitt
- 42: Deckelteil
- 43: Horizontalschenkel
- 44: Vertikalschenkel
- 45: Abstützfläche
- 46: Angriffsfläche
- 47: Innen-Mehrkantfläche
- 48: Befestigungsbereich
- 49: Gewindehülse
- 50: Gewinde
- 51: Anbauturmbaugruppe
- 52: Anbauturm-Innenkonusteil
- 53: Turm
- 54: Gurt
- 55: Innenkonusfläche
- 56: Konuswinkel
- 57: Endbereich
- 58: Außenfläche
- 59: Schrägfläche
- 60: Anbauturm-Abdeckkappenbaugruppe
- 61: Verbindungsschenkel
- 62: Vertikalschenkel
- 63: Vertikalschenkel

## Patentansprüche

1. Anbauturm-Außenkonusabdeckkappe (1) mit einem T-förmigen Längsschnitt mit einem Vertikalschenkel (2) und einem Horizontalschenkel (3), wobei der Horizontalschenkel (3) abgewinkelte Konusschenkel (5, 6) aufweist, welche eine Innenkonusfläche (7) begrenzen, und der Vertikalschenkel (2) einen Befestigungsbereich (11) aufweist, im Bereich dessen die Anbauturm-Aussenkonusabdeckkappe (1) an einem Anbauturm-Außenkonusteil (17) derart befestigbar ist, dass die Innenkonusfläche (7) der Anbauturm-Außenkonusabdeckkappe (1) an eine Außenkonusfläche (21) des Anbauturm-Außenkonusteils (17) angepresst wird.

2. Anbauturm-Außenkonusabdeckkappe (1) nach Anspruch 1, **dadurch gekennzeichnet, dass** die Anbauturm-Außenkonusabdeckkappe (1) aus Kunststoff hergestellt ist.

3. Anbauturm-Außenkonusabdeckkappe (1) nach Anspruch 2, **dadurch gekennzeichnet, dass** die Anbauturm-Außenkonusabdeckkappe (1) in einem Spritzgussverfahren hergestellt ist.

4. Anbauturm-Außenkonusabdeckkappe (1) nach einem der vorhergehenden Ansprüche, **dadurch gekennzeichnet, dass** der Befestigungsbereich (11) ein Gewinde (12), ein Rastelement und/oder eine Verriegelungselement aufweist, welches mit einem Gegen-Gewinde (25), Gegen-Rastelement oder Gegen-Verriegelungselement des Anbauturm-Außenkonusteils (17) verschraubbar, verrastbar und/oder verriegelbar ist.

5. Anbauturm-Außenkonusabdeckkappe (1) nach Anspruch 4, **dadurch gekennzeichnet, dass** der Vertikalschenkel (2) eine Rast- und/oder Gewindehülse (14) aufweist.

6. Anbauturm-Außenkonusabdeckkappe (1) nach Anspruch 5, **dadurch gekennzeichnet, dass** die Rast- und/oder Gewindehülse (14) mindestens einen Schlitz aufweist.

7. Anbauturm-Außenkonusabdeckkappe (1) nach einem der vorhergehenden Ansprüche, **dadurch gekennzeichnet, dass** die Innenkonusfläche (7) einen Konuswinkel (8) aufweist, der kleiner ist als ein Konuswinkel (22) der Außenkonusfläche (21) des Anbauturm-Außenkonusteils (17), und die Anbauturm-Außenkonusabdeckkappe (1) eine Elastizität aufweist, welche ermöglicht, dass sich der Konuswinkel (8) der Innenkonusfläche (7) infolge der Anpressung der Innenkonusfläche (7) der Anbauturm-Außenkonusabdeckkappe (1) an die Außenkonusfläche (21) des Anbauturm-Außenkonusteils (17) an den Konuswinkel (22) der Außenkonusfläche (21) angleicht.

8. Anbauturm-Außenkonusabdeckkappe (1) nach einem der vorhergehenden Ansprüche, **dadurch gekennzeichnet, dass** eine Angriffsfläche (9) für ein Werkzeug vorhanden ist.

9. Anbauturmbaugruppe (16) mit einem Anbauturm-Außenkonusteil (17) und einer hieran gehaltenen Anbauturm-Außenkonusabdeckkappe (1).

10. Verfahren zur Handhabung einer Anbauturmbaugruppe (16) nach Anspruch 9 mit folgenden Verfahrensschritten:
a) Bereitstellung des Anbauturm-Außenkonusteils (17);
b) Einsetzen des Vertikalschenkels (2) der Anbauturm-Außenkonusabdeckkappe (1) in eine Ausnehmung des Anbauturm-Außenkonusteils (17) und Verbindung des Befestigungsbereichs (11) der Anbauturm-Außenkonusabdeckkappe (1) mit dem Anbauturm-Außenkonusteil (17) in einer Montagestellung, in der die Innenkonusfläche (7) der Anbauturm-Außenkonusabdeckkappe (1) an eine Außenkonusfläche (21) des Anbauturm-Außenkonusteils (17) angepresst wird;
c) Durchführung von Arbeitsschritten an der Anbauturmbaugruppe (16) und/oder Transport der Anbauturmbaugruppe (16) und/oder Bevorratung der Anbauturmbaugruppe (16);
d) Beseitigung der Anbauturm-Außenkonusabdeckkappe (1).

11. Anbauturm-Abdeckkappenbaugruppe (60) mit zwei Deckelteilen (27, 42), wobei
a) die beiden Deckelteile (27; 42) jeweils T-förmig ausgebildet sind mit einem Vertikalschenkel (28; 44) und einem Horizontalschenkel (29; 43),
b) die beiden Vertikalschenkel (28; 44) miteinander verbindbar sind und
c) bei Verbindung der beiden Vertikalschenkel (28; 44) miteinander die Anbauturm-Abdecckappenbaugruppe (60) die Form eines liegenden H aufweist, bei dem die Vertikalschenkel (28; 44) der T-förmigen Deckelteile (27; 42) gemeinsam den Verbindungsschenkel (61) des H bilden und die beiden Horizontalschenkel (29; 43) der T-förmigen Deckelteile (27; 42) die Vertikalschenkel (62, 63) des H bilden,
d) so dass sich in einem an ein Anbauturm-Innenkonusteil (52)montierten Zustand
da) der Verbindungsschenkel (61) des H im Inneren einer Innenkonusfläche (55) des Anbauturm-Innenkonusteils (52) erstreckt und,
db) die Vertikalschenkel (62, 63) des H jeweils einen Endbereich der Innenkonusfläche (55) verschließen.

12. Anbauturm-Abdeckkappenbaugruppe (60) nach Anspruch 11, **dadurch gekennzeichnet, dass** die Verbindung der beiden Vertikalschenkel (28, 44) der T-förmigen Deckelteile (27, 42) eine Schraub-, Rast- und/oder Verriegelungsverbindung ist.

13. Anbauturm-Abdeckkappenbaugruppe (60) nach Anspruch 12, **dadurch gekennzeichnet, dass** mindestens ein Vertikalschenkel (28, 44) der T-förmigen Deckelteile (27, 42) eine Gewinde-, Rast- und/oder Verriegelungshülse (37, 49) aufweist.

14. Anbauturm-Abdeckkappenbaugruppe (60) nach Anspruch 13, **dadurch gekennzeichnet, dass** die Gewinde-, Rast- und/oder Verriegelungshülse (37) mindestens einen Schlitz (39) aufweist.

15. Anbauturm-Abdeckkappenbaugruppe (60) nach einem der Ansprüche 11 bis 14, **dadurch gekennzeichnet, dass** eine Stirnseite (33) eines Vertikalschenkels (62) des H in dem zugeordneten Endbereich an der Innenkonusfläche (55) anliegt.

16. Anbauturm-Abdeckkappenbaugruppe (60) nach Anspruch 15, **dadurch gekennzeichnet, dass** die Stirnseite (33) als Konusfläche (34) ausgebildet ist.

17. Anbauturm-Abdeckkappenbaugruppe (60) nach einem der Ansprüche 11 bis 16, **dadurch gekennzeichnet, dass** ein Vertikalschenkel (63) des H an einer Außenfläche (58) des Anbauturm-Innenkonusteils (52) abgestützt ist, die an den Endbereich der Innenkonusfläche (55) angrenzt.

18. Anbauturm-Abdeckkappenbaugruppe (60) nach einem der Ansprüche 11 bis 17, **dadurch gekennzeichnet, dass** mindestens ein Deckelteil (27, 42) eine Angriffsfläche (30 45) für ein Werkzeug aufweist.

19. Set mit einer Anbauturm-Abdeckkappenbaugruppe (60) nach einem der Ansprüche 11 bis 18 und einem weiteren Deckelteil (42), dessen Vertikalschenkel (44) eine andere Länge aufweist als das Deckelteil (42) der Anbauturm-Abdeckkappenbaugruppe (60).

20. Anbauturmbaugruppe (51) mit einem Anbauturm-Innenkonusteil (52) und einer hieran gehaltenen Anbauturm-Abdeckkappenbaugruppe (60) nach einem der Ansprüche 11 bis 18.

21. Verfahren zur Handhabung einer Anbauturmbaugruppe (51) nach Anspruch 20 mit folgenden Verfahrensschritten:
a) Bereitstellung des Anbauturm-Innenkonusteils (52);
b) Einsetzen eines Deckelteils (27) von einer Seite der Innenkonusfläche (55) des Anbauturm-Innenkonusteils (52);
c) Einsetzen des anderen Deckelteils (42) von der anderen Seite der Innenkonusfläche (55) des Anbauturm-Innenkonusteils (52) und Verbindung der Vertikalschenkel (28, 44) der Deckelteile (27, 42) miteinander in einer Montagestellung, in der die Horizontalschenkel (29, 43) der Deckelteile (27, 42) jeweils einen Endbereich der Innenkonusfläche (55) verschließen;
d) Durchführung von Arbeitsschritten an der Anbauturmbaugruppe (51) und/oder Transport der Anbauturmbaugruppe (51) und/oder Bevorratung der Anbauturmbaugruppe (51);
e) Beseitigung der beiden Deckelteile (27, 42).
